# DEMANDE DE BREVET EUROPEEN

(11) **EP 4 775 048 A1**
(43) Date de publication de la demande: **15.07.2026**
(21) Numéro de dépôt: 25218522.8
(22) Date de dépôt: 25.11.2025
(51) Int. Cl.: A23P 30/10, A22C 7/00

(54) **APPAREIL DE FABRICATION D'UN PRODUIT ALIMENTAIRE COMPRENANT NOTAMMENT DEUX MODULES A GOULOTTES, MODULE DE GOULOTTE ET PROCEDE DE FABRICATION CORRESPONDANTS**

(30) Priorité: 12.01.2025 FR 2500293
(71) Demandeur: System B, 53810 Change (FR)
(72) Inventeur: BEUCHER, Jérémy, 53000 LAVAL (FR); LECLERC, Mathis, 53210 LOUVIGNE (FR)
(74) Mandataire: Vidon Brevets & Stratégie

(57) **Abrégé**

L'invention concerne un appareil (1) pour la fabrication d'un produit alimentaire comprenant deux modules (110, 120) comprenant chacun plusieurs goulottes (1100, 1200), les deux modules (110, 120) étant destinés à être positionnés en vis-à-vis de sorte à ce que les espaces intérieurs des goulottes (1100, 1200) en vis-à-vis forment plusieurs cavités (130) de réception d'une portion de produit alimentaire à conformer, chaque goulotte (1100, 1200) présentant une extrémité fermée par une première portion recourbée (1100B, 1200B) prolongée par une deuxième portion (1100C, 1200C) de prolongement s'étendant au-delà des deux bords latéraux (1100D) de la goulotte (1100, 1200), au moins un des modules (110, 120) étant apte à être déplacé en translation par rapport à l'autre module (110, 120) de sorte à ce que les portions de prolongement (1100C, 1200C) des goulottes (1100, 1200) se rapprochent et compressent la portion de produit disposée dans la cavité (130) correspondante.

## Description

### DOMAINE TECHNIQUE DE L'INVENTION

Le domaine de la divulgation est celui de l'agroalimentaire, et notamment les produits alimentaires commercialisés en boucherie ou en grandes et moyennes surfaces de distribution.

Plus particulièrement, la divulgation concerne les dispositifs d'aide à la fabrication de produits alimentaires, se présentant par exemple, mais non exclusivement, sous la forme de boules ou de buchettes de chair ou de viande hachée (avec ou sans panure), par exemple. Généralement, ces produits alimentaires sont commercialisés crus de sorte que le client puisse faire cuire lui-même le produit alimentaire, par exemple au four, à la poêle ou au barbecue.

### Art antérieur

Il est connu, pour fabriquer de tels produits alimentaires, d'assembler à la main les différents ingrédients du mélange et de façonner/conformer, à la main encore une fois, cet assemblage selon une forme sensiblement sphérique, par exemple, lorsqu'il s'agit de fabriquer un produit de type boulette de viande ou cylindrique lorsqu'il s'agit de fabriquer un produit de type buchette.

Toutefois, un inconvénient de cette technique réside dans le fait que le mélange, l'assemblage des différents aliments puis le façonnage du produit sont relativement chronophages, notamment lorsque l'on souhaite donner une forme esthétique au produit fini, comme celle d'une sphère pour une boulette par exemple. Ce critère esthétique ne peut être ignoré afin de faciliter la vente de tels produits par le professionnel qui les prépare. Un autre inconvénient de cette technique réside dans le fait que les portions d'aliments à assembler ne sont pas toujours identiques. Ainsi, il existe un risque pour que la forme et les dimensions du produit alimentaire ne soient pas régulières d'un produit à l'autre, ce qui peut avoir un impact négatif sur les ventes du produit alimentaire.

Encore un autre inconvénient réside dans le fait qu'il est généralement nécessaire d'utiliser de la ficelle, du film plastique ou bien du film de cuisson pour tenter de donner au produit alimentaire une forme définie. Or, l'utilisation des tels éléments est relativement complexe et chronophage et ne garantit pas un résultat optimal.

Il existe donc un besoin de fournir une solution de fabrication nouvelle d'un produit alimentaire de type boulette ou buchette par exemple qui soit simple et rapide à mettre en œuvre et qui permette d'obtenir une forme régulière et esthétique du produit après fabrication.

### Résumé de la divulgation

L'invention répond à ces besoins en proposant un appareil pour la fabrication d'un produit alimentaire à base d'un ou de plusieurs ingrédients, ledit appareil comprenant deux modules comprenant chacun plusieurs goulottes s'étendant parallèlement les unes aux autres, chaque goulotte d'un module présentant un espace intérieur défini par au moins une paroi comprenant deux bords latéraux qui s'étendent selon la direction longitudinale de la goulotte, les deux modules étant destinés à être positionnés avec leurs goulottes en vis-à-vis de sorte à ce que les espaces intérieurs des goulottes en vis-à-vis forment plusieurs cavités de réception d'une portion de produit alimentaire à conformer, en boule par exemple, lesdites cavités s'étendant parallèlement les unes aux autres, chaque goulotte desdits modules présentant une extrémité fermée par une première portion recourbée prolongée par une deuxième portion dite de prolongement s'étendant au-delà des deux bords latéraux de la goulotte, ladite portion de prolongement d'une goulotte étant configurée pour venir se loger dans l'espace intérieur de la goulotte en vis-à-vis, de telle sorte que les portions de prolongement de deux goulottes en vis-à-vis sont positionnées tête-bêche et ferment les deux extrémités opposés de la cavité de réception correspondante, l'un des modules étant apte à être déplacé en translation par rapport à l'autre module de sorte à ce que les portions de prolongement des goulottes en vis-à-vis se rapprochent et compressent ou conforment la portion de produit disposée dans la cavité correspondante.

Ainsi, la divulgation propose une solution simple et efficace qui permet de faciliter la fabrication d'un produit alimentaire se présentant par exemple sous la forme d'une boule ou d'une buchette.

L'invention propose ainsi un appareil en deux parties mettant en œuvre des goulottes de géométrie particulière accueillant des portions de produit alimentaire à conformer, ce qui rend la préparation de ce type de produit plus simple et permet une répétabilité dans la fabrication de ce type de produit de sorte à obtenir des produits homogènes/identiques.

En déplaçant en translation un module de goulottes par rapport à l'autre, la préparation est d'abord compressée entre les portions de prolongement de deux goulottes en vis-à-vis. Une fois préformée, la préparation est roulée par des déplacements en va-et-vient du module de goulottes par rapport à l'autre jusqu'à obtenir la forme voulue (boule ou buchette).

Selon une mise en œuvre particulière de l'invention, un premier module est solidaire d'un bâti fixe et le deuxième module est solidaire d'un plateau monté coulissant sur le bâti fixe. Dans un mode de réalisation particulier, les goulottes des modules sont indépendantes les unes des autres et étant chacune montées mobiles en translation sur un support, chaque goulotte étant associée à des moyens de rappel de la goulotte en position neutre.

Selon un aspect particulier de l'invention, les deux bords latéraux de chacune des goulottes présentent chacun au moins une encoche d'arrachement des fibres contenues dans le produit alimentaire à conformer.

Selon un autre aspect particulier de l'invention, ladite portion de prolongement de chaque goulotte comprend au moins un évent de passage d'air vers l'extérieur du canal de réception correspondant.

Selon un aspect particulier de l'invention, chacun des modules comprend des premiers moyens de fixation réversible aptes à coopérer avec des seconds moyens de fixation réversible disposés sur le bâti et le plateau respectivement.

Selon les modes de réalisation, les premiers et seconds moyens de fixation peuvent être par exemple des moyens de fixation par clipsage ou vissage.

Selon un aspect particulier de l'invention, le plateau porte au moins une poignée de préhension pour déplacer en coulissement le plateau par rapport au bâti fixe.

Selon un autre aspect particulier de l'invention, les goulottes desdits modules sont dimensionnées pour fabriquer un produit alimentaire présentant une forme de révolution, tel une boulette ou une bûchette.

L'invention concerne également un module de goulottes adapté pour être mis en œuvre dans un appareil tel que décrit précédemment, ledit module comprenant plusieurs goulottes s'étendant parallèlement les unes aux autres, chaque goulotte présentant un espace intérieur défini par au moins une paroi comprenant deux bords latéraux qui s'étendent selon la direction longitudinale de la goulotte, chaque goulotte présentant une extrémité fermée par une première portion recourbée prolongée par une deuxième portion dite de prolongement s'étendant au-delà des deux bords latéraux de la goulotte.

L'invention concerne encore un procédé de fabrication d'un produit alimentaire mettant en œuvre un appareil de fabrication tel que décrit précédemment, comprenant les étapes de :
- dépose d'un morceau de produit alimentaire en travers des goulottes d'un premier desdits modules ;
- positionnement des deux modules en vis-à-vis pour diviser ledit morceau en plusieurs portions de produit alimentaire à l'aide des bords latéraux des goulottes du deuxième desdits modules ;
- déplacement en translation du deuxième module par rapport au premier module pour conformer et lisser la portion de produit alimentaire disposé dans chaque cavité formée par deux goulottes disposées en vis-à-vis ;
- retrait du produit alimentaire conformé dudit appareil.

### Liste des figures

D'autres caractéristiques et avantages de l'invention apparaîtront à la lecture de la description suivante de modes de réalisation, donnés à titre de simples exemples illustratifs et non limitatifs, et des dessins annexés, parmi lesquels :
- [Fig.1] : la figure 1 est une vue partielle en perspective d'un appareil selon l'invention ;
- [Fig.2] : la figure 2 est une vue éclatée partielle de l'appareil de la figure 1 dans lequel sont mis en œuvre des modules de goulottes d'un premier type ;
- [Fig.3] : la figure 3 est une vue en perspective de l'appareil de la figure 2 en configuration de fonctionnement ;
- [Fig.4] : la figure 4 est une vue en perspective d'une seule goulotte d'un premier type apte à être mise en œuvre dans un appareil selon l'invention ;
- [Fig.5] : la figure 5 est une vue de dessous d'un exemple de module de goulottes d'un premier type ;
- [Fig.6] : la figure 6 est une vue en perspective de l'appareil avant la division d'un produit alimentaire disposé en travers des goulottes du bâti ;
- [Fig.7] : la figure 7 est une vue en coupe partielle montrant le produit alimentaire avant division situé entre des goulottes du bâti et des goulottes du plateau de l'appareil ;
- [Fig. 8] : la figure 8 est une vue en perspective montrant la coopération des modules de goulottes d'un premier type lorsqu'ils sont mis en œuvre dans un appareil selon l'invention ;
- [Fig.9A] : la figure 9A est une vue de côté des modules de goulottes de la figure 8 ;
- [Fig.9B] : la figure 9B est une vue en coupe longitudinale des modules de goulottes de la figure 9A montrant la préparation alimentaire lorsqu'elle est déplacée pour être compressée;
- [Fig.10] : la figure 10 montre les modules de goulottes de la figure 9B dans une autre position montrant la préparation alimentaire compressée ;
- [Fig.11] : la figure 11 est une vue partielle de modules de goulottes d'un second type aptes à être mis en œuvre dans un appareil selon l'invention ;
- [Fig.12] : la figure 12 est une vue en coupe longitudinale des modules de goulottes de la figure 11.

### DESCRIPTION DÉTAILLÉE DE L'INVENTION

La présente description est donnée à titre d'exemple de réalisation non limitatif.

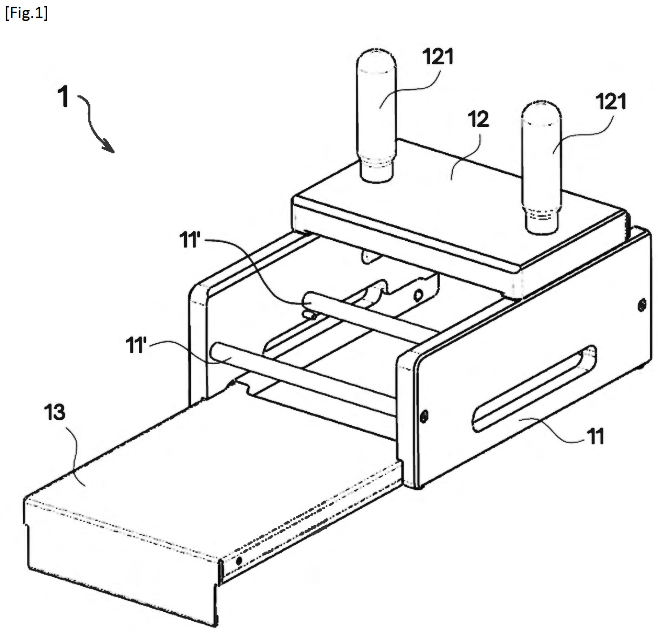

On présente en relation avec la figure 1 un appareil pour la fabrication d'un produit alimentaire à base d'un ou de plusieurs ingrédients.

Cet appareil 1, également appelé formeuse, est destiné à la formation de préparations, principalement de la viande hachée, ou d'autres denrées alimentaires, et cela en diverses formes (boulettes ou buchettes, par exemple) et selon différents grammages.

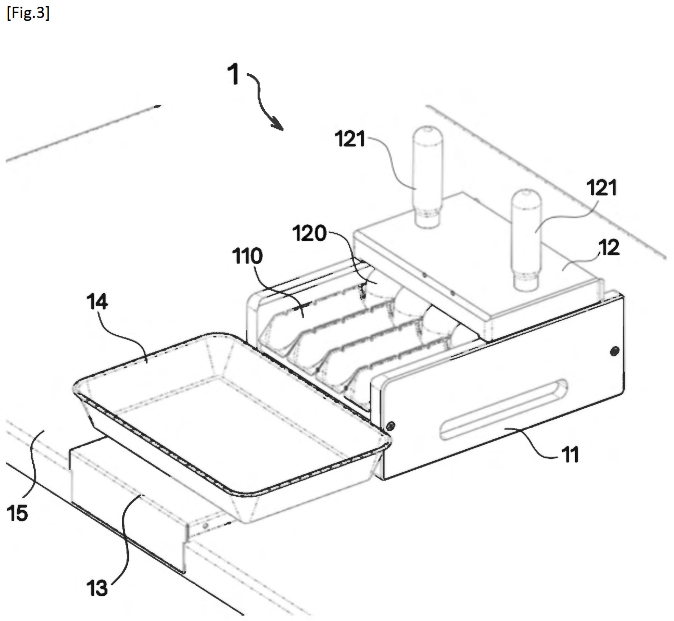

L'appareil 1 est composé d'un bâti 11 et d'un plateau 12 qui utilisent la friction pour transformer le produit en une préparation de type boulette ou buchette par exemple. Une plaque 13 en inox est conçue pour pouvoir être solidarisée de façon amovible au bâti 11 et permet d'accrocher l'appareil 1 au bord d'un plan de travail 15 (figure 3) pour stabiliser l'appareil 1. Cette plaque 13 permet en outre de réceptionner les produits fabriqués par l'appareil 1 ou bien d'y positionner un bac 14 de récupération des produits formés (figure 3).

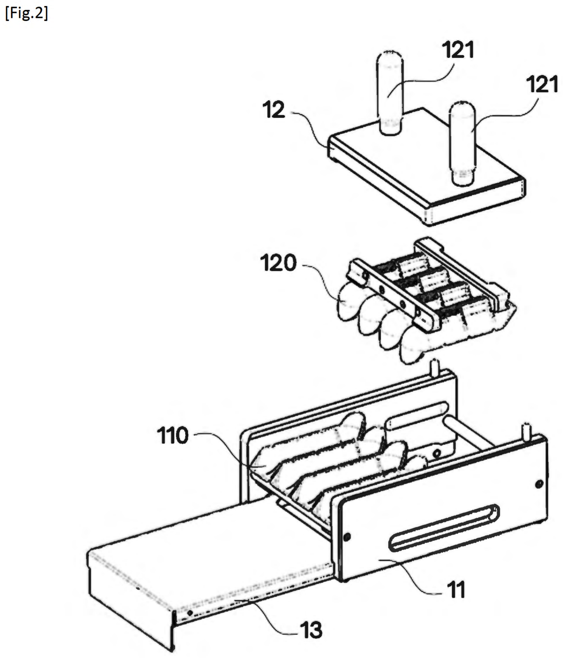

L'appareil 1 met en œuvre des modules de goulottes 110, 120 qui ne sont pas visibles sur la figure 1 mais qui seront décrits plus en détails par la suite. On distingue sur cette figure 1 deux tiges de fixation 11' parallèles reliant les parois latérales du bâti 11 et sur lesquelles vient se fixer (par clipsage par exemple) le premier module 110 inférieur visible sur la figure 2 notamment.

Le deuxième module 120 supérieur visible sur la figure 2 vient se fixer sur la face interne du plateau 12 par des moyens de fixation adaptés (par clipsage par exemple).

La face externe du plateau 12 présente dans l'exemple illustré deux poignées de préhension 121. Dans une variante non illustrée, une seule poignée pourrait être mise en œuvre sur la face externe du plateau 12.

Le plateau 12 est monté coulissant sur le bâti 11 et est situé en position arrière sur les figures 1 et 3. Lorsque le plateau 12 est positionné sur le bâti 11, les deux modules 110, 120 inférieur et supérieur se font face. L'opérateur est situé du côté de la plaque 13 et peut faire coulisser le plateau entre la position avant (situé côté plaque 13) et la position arrière (figures 1 et 3 donc).

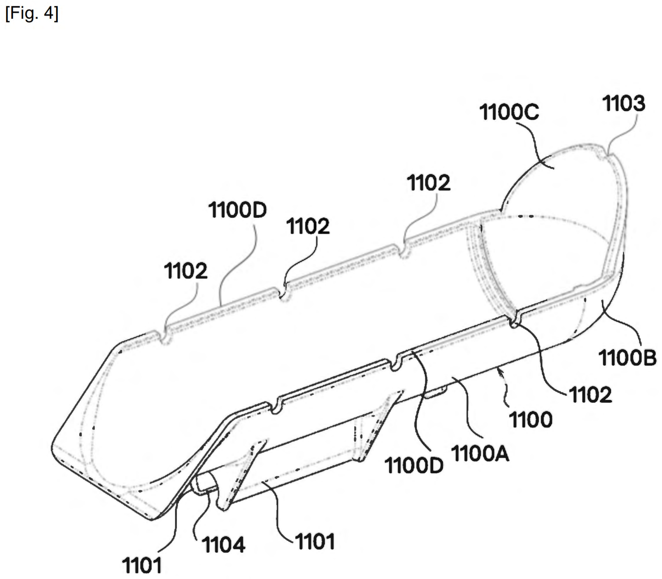

Un premier exemple de structure d'une goulotte est illustré sur la figure 4. Dans cet exemple, la goulotte 1100 dite du premier type présente un espace intérieur défini par une paroi semi-cylindrique 1100A en-dessous de laquelle font saillie deux pattes de serrage 1101 disposées en regard. Les deux bords latéraux 1100D de la paroi semi-cylindrique 1100A s'étendent selon la direction longitudinale de la goulotte 1100. Une extrémité (gauche sur la figure 4) de la goulotte 1100 est ouverte et présente une paroi en oblique, l'extrémité opposée étant fermée par une première portion 1100B incurvée présentant une forme en demi-coupole soit un quart de sphère. Cette première portion 1100B incurvée est prolongée par une deuxième portion de prolongement 1100C prenant la forme dans cet exemple d'une lèvre courbe. La deuxième portion de prolongement 1100C s'étend au-delà des deux bords latéraux 1100D de la goulotte 1100.

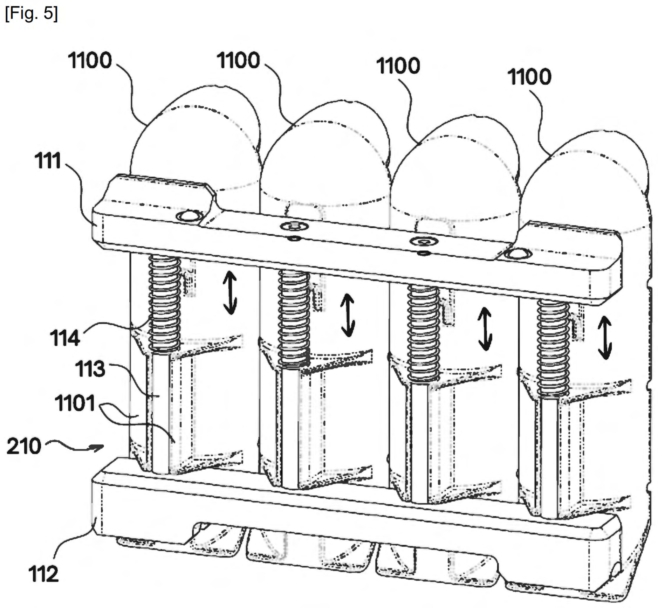

Un module de goulottes 110 comprenant plusieurs goulottes telles que décrit en relation avec la figure 4 est illustré sur la figure 5.

Dans l'exemple illustré, les goulottes 1100 du module 110 sont indépendantes les unes des autres et sont chacune montées mobiles en translation sur un support, chaque goulotte 1100 du module étant associée à un ressort de rappel 114 de la goulotte en position neutre. Le support est constitué de deux traverses 111, 112 espacées, chaque goulotte 1100 pouvant coulisser le long d'une tige de guidage 113 dont les extrémités sont fixées sur chacune des traverses 111, 112. Le dessous de chaque goulotte 1100 porte deux pattes de serrage 1101 disposées en regard qui enserrent la tige de guidage 113 correspondante. Entre ces pattes de serrage 1101 et la traverse 111 est monté un ressort de rappel 114 en position neutre de la goulotte 1100. On distingue sur cette figure 5 quatre goulottes 1100 qui peuvent prendre des positions distinctes les unes des autres par rapport au support de goulottes constitué de deux traverses 111, 112, le ressort de rappel 114 pouvant être plus au moins comprimé entre les pattes 1101 et la traverse 111 selon la position de la goulotte 1100 mobile correspondante (le déplacement de chaque goulotte est schématisé par une flèche double). On comprend que l'appareil peut mettre en œuvre un module inférieur 110 et un module 120 supérieur présentant la même structure que celle illustrée sur la figure 5.

Avantageusement, il est possible d'écarter légèrement les goulottes 1100 les unes par rapport aux autres de sorte à pouvoir nettoyer les interstices entre elles qui pourraient contenir des morceaux de préparation.

Dans une variante non illustrée, l'appareil peut mettre en œuvre un module inférieur 110 et un module 120 supérieur comprenant plusieurs goulottes montées fixes sur un support.

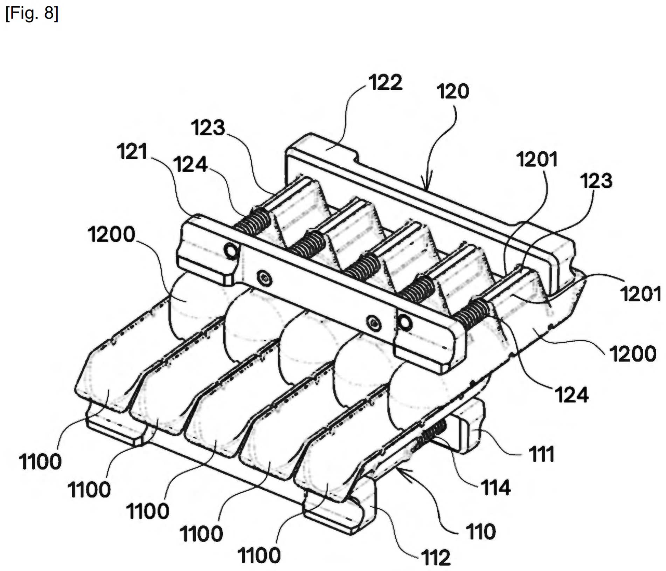

La figure 8 montre un module 110 inférieur et un module 120 supérieur représentés seuls (par souci de clarté, le reste de l'appareil 1 n'a pas été représenté) comprenant chacun cinq goulottes 1100, 1200 respectivement du premier type formant plusieurs gorges ou canaux parallèles. Le module 110 inférieur comprend comme sur la figure 5 deux traverses 111 et 112, des ressorts de rappel 114 et des tiges de guidage 113 enserrées chacune par des pattes de serrage 1101. Le module 120 supérieur comprend deux traverses 121 et 122, des ressorts de rappel 124 et des tiges de guidage 123 enserrées chacune par des pattes de serrage 1201.

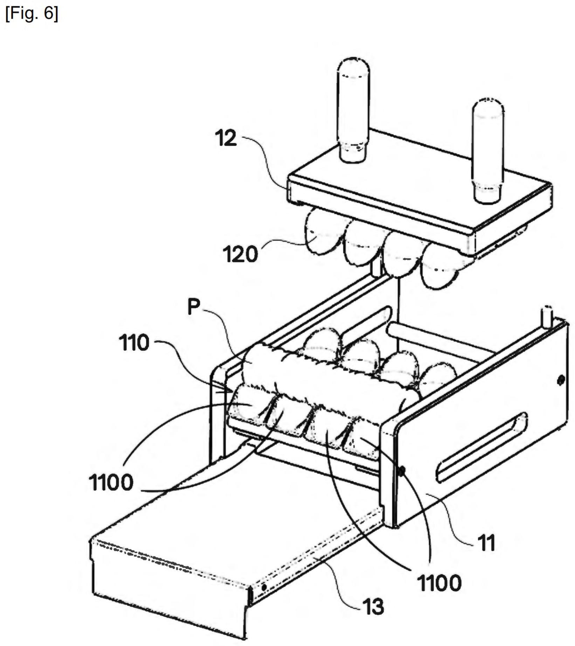

En fonctionnement, les deux modules 110, 120 sont positionnés avec leurs goulottes 1100, 1200 en vis-à-vis de sorte à former plusieurs cavités parallèles de réception d'une portion de produit alimentaire à conformer, en boules dans cet exemple. Comme illustré sur la figure 6, le produit P à former est d'abord disposé et étalé en travers des goulottes 1100 du module inférieur 110, c'est-à-dire perpendiculairement à l'axe longitudinal des goulottes 1100, du côté avant de l'appareil de préférence. Le plateau 12 n'est pas encore disposé sur le bâti 11 à ce stade comme visible sur la figure 6 et le produit P en forme de cylindre repose sur les bords latéraux 1100D de toutes les goulottes 1100.

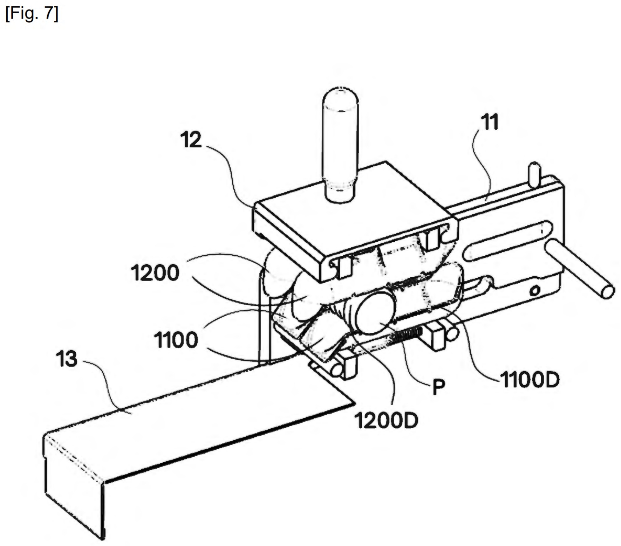

La figure 7 montre le plateau 12 juste avant qu'il ne soit disposé sur le bâti 11. A ce stade, les bords latéraux 1200D des goulottes 1200 du plateau 12 viennent au contact du produit P en forme de cylindre reposant sur les bords latéraux 1100D de toutes les goulottes 1100.

Lorsque le plateau 12 est solidarisé au bâti 11 et plaqué contre ce dernier, le produit P est découpé par les bords latéraux 1200D des goulottes 1200 et subdivisé en plusieurs portions de produit, chaque portion de produit reposant alors sur le fond d'une goulotte 1100.

A l'aide de l'appareil 1, à partir de chaque portion de produits, une boulette est formée par chaque paire de goulottes 1100, 1200 en vis-à-vis.

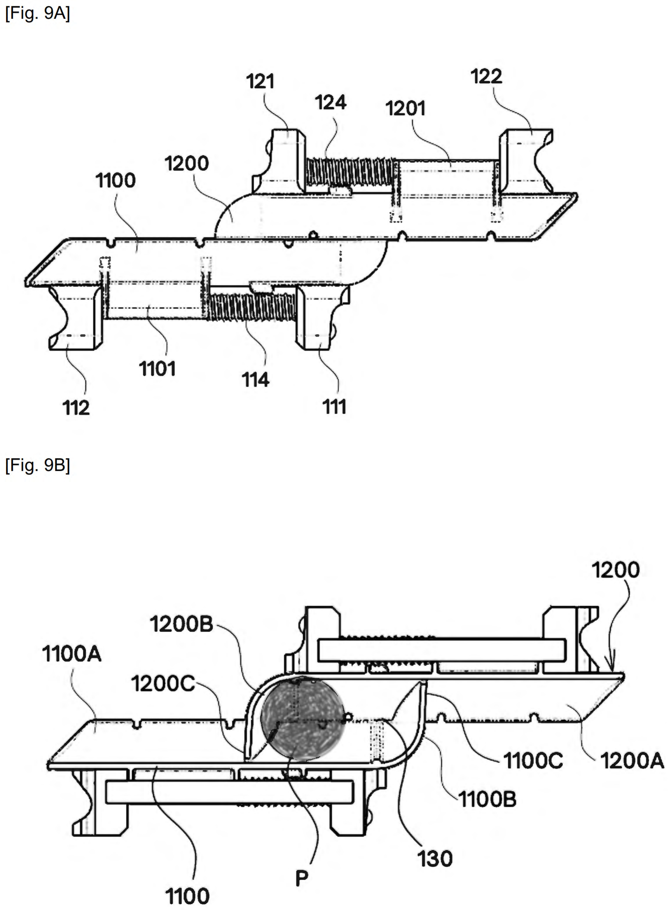

Comme visible sur les figures 9A et 9B, deux goulottes 1100, 1200 en vis-à-vis définissent une cavité interne 130 dans laquelle une portion de produit alimentaire est reçue une fois que le plateau 12 et son module supérieur 120 sont montés sur le bâti 11. Sur les figures 8 et 9B, on distingue clairement que la portion de prolongement 1100C d'une goulotte 1100 du module inférieur 110 vient se loger dans l'espace intérieur d'une goulotte 1200 du module supérieur 120, et que la portion de prolongement 1200C de la goulotte 1200 du module supérieur 120 vient se loger dans l'espace intérieur de la goulotte 1100 du module inférieur 110.

Ainsi, les portions de prolongement 1100C, 1200C de deux goulottes 1100, 1200 disposées en vis-à-vis sont positionnées tête-bêche et ferment les deux bords opposés de la cavité interne 130 correspondante.

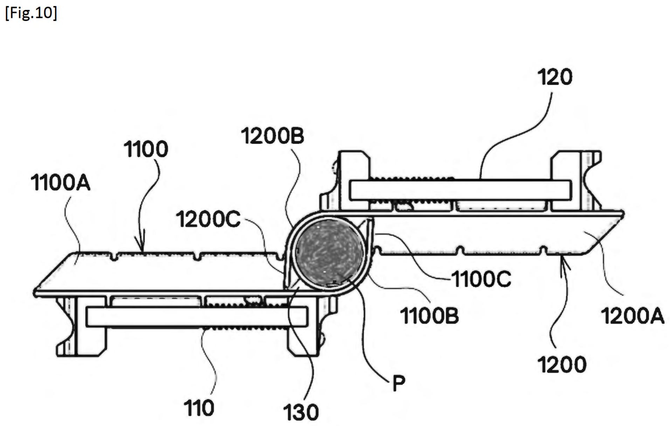

En coulissant de l'avant vers l'arrière le plateau 12 sur le bâti 11, le volume de chaque cavité interne 130 se réduit progressivement (figure 9B) et le produit P est, en fond de course du plateau 12, compressé entre les portions de prolongement 1100C, 1200C des goulottes 1100, 1200 disposées en vis-à-vis (figure 10). Le produit P est alors préformé approximativement en boule. Le produit P est ensuite roulé en faisant coulisser le plateau 12 par rapport au bâti 11 selon un mouvement de va-et-vient et formé en une boule par friction.

Autrement dit, une fois le produit divisé en plusieurs portions, le processus pour former une boule ou une buchette par exemple se déroule en deux étapes principales de compression et de roulage :
- la préparation est d'abord amenée en butée entre les portions de prolongement 1100C, 1200C pour être compressée dans la forme voulue. Cette étape est importante car elle préforme le produit et le prépare à être roulé en agglomérant la préparation ;
- le plateau 12 est alors déplacé en translation par rapport au bâti 11 pour faire rouler la préparation.

Les goulottes 1100 du module 110 étant indépendantes les unes des autres dans l'exemple illustré, une fois le produit séparé par la mise en place du plateau 12 et de son module 120 supérieur sur le module 110 inférieur, les paires de goulotte viennent alors travailler indépendamment grâce à l'utilisation des ressorts, ce qui permet de compenser des écarts de volumes de préparation entre les goulottes et permet donc de garantir une compression optimale pour chaque produit formé dans chacune des paires de goulottes.

Une fois formés, les produits sont extraits en translatant le plateau 12 vers l'opérateur, ou en étant poussé avec l'arrière du plateau 12 pour qu'ils tombent dans un bac de récupération.

Certaines préparations comprennent des fibres, par exemple la viande hachée de porc qui peut contenir de nombreux nerfs qui maintiennent les produits attachés une fois les goulottes disposées en regards. Pour résoudre cela, dans les exemples illustrés, il est prévu des gorges ou encoches 1102 réparties le long des deux bords latéraux de chaque goulotte 1100 et dans lesquelles viennent se loger ces fibres qui sont ainsi arrachées de la préparation lors du roulage, ce qui garantit une obtention de boules de produit alimentaire séparées.

Afin d'éviter toute problématique qui serait due à la présence d'air lors de la compression et du roulage de la préparation, un évent 1103 est formé en bout de goulotte 1100, sur le bord libre de la portion de prolongement, afin de permettre à l'air de s'échapper librement sans laisser passer la préparation.

Les modules peuvent être équipés de différentes goulottes, permettant d'obtenir différentes formes et poids de produits alimentaires ce qui permet notamment de réaliser des boulettes ou bien des buchettes comme décrit par la suite.

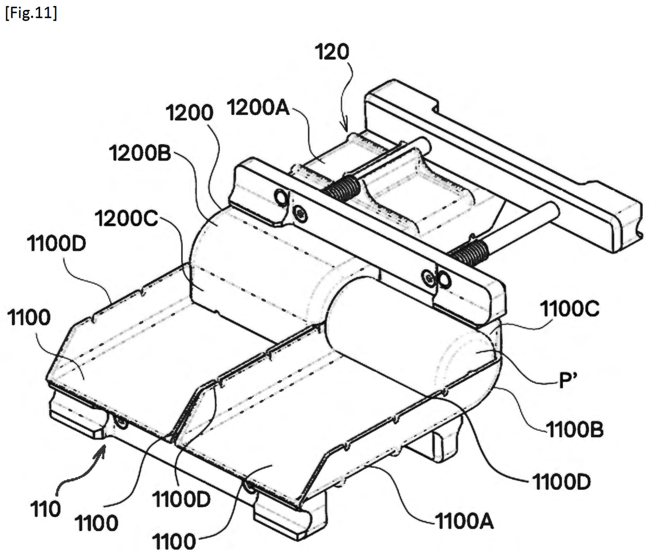

La figure 11 est une vue partielle de modules de goulottes d'un second type aptes à être mis en œuvre dans un appareil selon l'invention. Dans l'exemple illustré, le module 1100 d'un second type présente un espace intérieur défini par une paroi de fond et deux parois latérales s'étendant perpendiculairement à la paroi de fond. Chaque paroi latérale présente un bord latéral libre 1100D qui s'étend selon la direction longitudinale de la goulotte, Chaque goulotte présente une extrémité ouverte et une extrémité fermée opposée. Cette extrémité fermée comprend une première portion recourbée 1100B quart-cylindrique et une deuxième portion de prolongement 1100C s'étendant au-delà des deux bords latéraux 1100D de la goulotte 1100. L'autre module 1200 présente la même géométrie, notamment une première portion recourbée 1200B de forme quart-cylindrique et une deuxième portion de prolongement 1200C s'étendant au-delà des deux bords latéraux 1200D de la goulotte 1200.

Sur cette figure 11, deux goulottes 1100 juxtaposées sont représentées, une seule goulotte 1200 étant illustrée. Sur la goulotte 1100 de droite est représenté un produit P' en forme de buchette obtenu par la mise en œuvre de telles goulottes 1100, 1200, dite d'un second type.

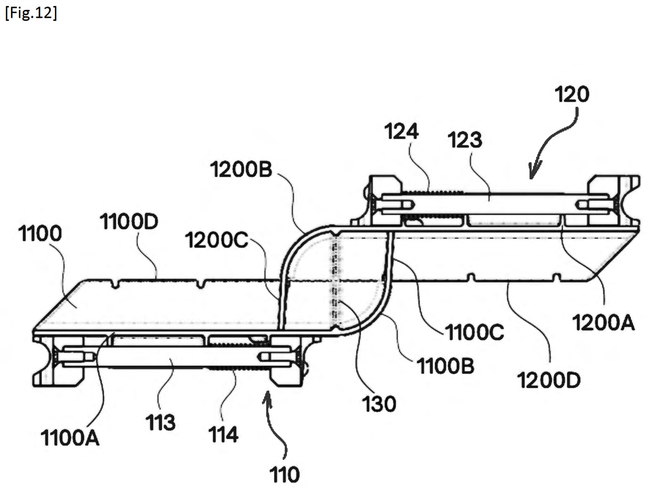

La figure 12 est une vue en coupe longitudinale des modules de goulottes de la figure 11 montrant la cavité de réception d'un produit alimentaire (non représenté) formé par les extrémités fermées de deux goulottes 1100, 1200 disposées en regard.

Les modules sont conçus pour être aisément montés sur l'appareil (par clipsage de préférence) et démontés pour le nettoyage de l'appareil. Ceci permet d'adapter rapidement l'appareil pour la fabrication de différents types de produits.

La solution de la présente divulgation permet donc de faciliter et d'optimiser la fabrication de produits alimentaires. En effet, grâce à la mise en œuvre des deux modules, le façonnage du produit est simplifié, tout comme le démoulage du produit dit « fini » qui est également facilité. La fabrication du produit alimentaire est donc rendue plus simple et plus rapide, tout en garantissant une homogénéité de forme.

Ainsi, la mise en œuvre des goulottes permet également d'obtenir un produit alimentaire dont la forme est régulière et donc plus esthétique.

Cet appareil permet par exemple de compresser et de rouler la préparation en différents produits selon les modules utilisés, permettant par exemple de réaliser des boulettes ainsi que des buchettes. On peut toutefois imaginer pouvoir former d'autres types de produits.

Le bâti et le plateau présentent des moyens de coulissement du plateau sur le bâti. Ainsi, le bâti peut porter sur le bord supérieur de ses faces latérales opposées un rail de guidage dans lequel est apte à coulisser une nervure de guidage du plateau, par exemple. D'autres solutions peuvent bien sûr être envisagées pour assurer ce coulissement.

La géométrie des goulottes et leur volume intérieur peuvent être choisis selon le grammage désiré de chaque produit fabriqué à l'aide de l'appareil.

On rappelle plus généralement que l'invention ne se limite pas aux exemples décrits et représentés.

## Revendications

1. Appareil (1) pour la fabrication d'un produit alimentaire à base d'un ou de plusieurs ingrédients, ledit appareil comprenant deux modules (110, 120) comprenant chacun plusieurs goulottes (1100, 1200) s'étendant parallèlement les unes aux autres, chaque goulotte (1100, 1200) desdits modules (110, 120) présentant un espace intérieur défini par au moins une paroi comprenant deux bords latéraux (1100D) qui s'étendent selon la direction longitudinale de la goulotte (1100, 1200),
les deux modules (110, 120) étant destinés à être positionnés avec leurs goulottes (1100, 1200) en vis-à-vis de sorte à ce que les espaces intérieurs des goulottes (1100, 1200) en vis-à-vis forment plusieurs cavités (130) de réception d'une portion de produit alimentaire à conformer, en boule par exemple, lesdites cavités (130) s'étendant parallèlement les unes aux autres,
chaque goulotte (1100, 1200) desdits modules (110, 120) présentant une extrémité fermée par une première portion recourbée (1100B, 1200B) prolongée par une deuxième portion (1100C, 1200C) dite de prolongement s'étendant au-delà des deux bords latéraux (1100D) de la goulotte (1100, 1200), ladite portion de prolongement (1100C, 1200C) d'une goulotte (1100, 1200) étant configurée pour venir se loger dans l'espace intérieur de la goulotte (1100, 1200) située en vis-à-vis, de telle sorte que les portions de prolongement (1100C, 1200C) de deux goulottes (1100, 1200) disposées en vis-à-vis sont positionnées tête-bêche et ferment les deux extrémités opposés de la cavité (130) de réception correspondante, au moins un des modules (110, 120) étant apte à être déplacé en translation par rapport à l'autre module (110, 120) de sorte à ce que les portions de prolongement (1100C, 1200C) des goulottes (1100, 1200) en vis-à-vis se rapprochent et compressent la portion de produit disposée dans la cavité (130) correspondante.

2. Appareil (1) selon la revendication 1, un premier module (110) étant solidaire d'un bâti (11) fixe et le deuxième module (120) étant solidaire d'un plateau (12) monté coulissant sur le bâti (11) fixe.

3. Appareil (1) selon la revendication 1 ou 2, les goulottes (1100, 1200) des modules étant indépendantes les unes des autres et étant chacune montées mobiles en translation sur un support, chaque goulotte (1100, 1200) étant associée à des moyens de rappel (114, 124) de la goulotte en position neutre.

4. Appareil (1) selon l'une des revendications 1 à 3, les deux bords latéraux (1100D) de chacune des goulottes (1100, 1200) présentant chacun au moins une encoche (1102) d'arrachement des fibres contenues dans le produit alimentaire à conformer.

5. Appareil (1) selon l'une des revendications 1 à 4, ladite portion de prolongement (1100C, 1200C) de chaque goulotte comprenant au moins un évent (1103) de passage d'air vers l'extérieur du canal (130) de réception correspondant.

6. Appareil (1) selon l'une des revendications 2 à 5, chacun des modules (110, 120) comprenant des premiers moyens de fixation réversible aptes à coopérer avec des seconds moyens de fixation réversible disposés sur le bâti (11) et le plateau (12) respectivement.

7. Appareil (1) selon l'une des revendications 2 à 6, le plateau (12) portant au moins une poignée de préhension (121) pour déplacer en coulissement le plateau (12) par rapport au bâti (11) fixe.

8. Appareil (110, 120) selon l'une des revendications 2 à 7, les goulottes (1100, 1200) desdits modules (110, 120) étant dimensionnées pour fabriquer un produit alimentaire présentant une forme de révolution, tel une boulette ou une bûchette.

9. Module (110, 120) de goulottes adapté pour être mis en œuvre dans un appareil selon l'une des revendications 1 à 8, ledit module comprenant plusieurs goulottes (1100, 1200) s'étendant parallèlement les unes aux autres, chaque goulotte (1100, 1200) présentant un espace intérieur défini par au moins une paroi comprenant deux bords latéraux (1100D) qui s'étendent selon la direction longitudinale de la goulotte (1100, 1200), chaque goulotte (1100, 1200) présentant une extrémité fermée par une première portion recourbée (1100B, 1200B) prolongée par une deuxième portion (1100C, 1200C) dite de prolongement s'étendant au-delà des deux bords latéraux (1100D) de la goulotte (1100, 1200).

10. Procédé de fabrication d'un produit alimentaire mettant en œuvre un appareil de fabrication selon l'une des revendications 1 à 8 comprenant les étapes de :
- dépose d'un morceau de produit alimentaire en travers des goulottes (1100) d'un premier desdits modules (110) ;
- positionnement des deux modules (110, 120) en vis-à-vis pour diviser ledit morceau en plusieurs portions de produit alimentaire à l'aide des bords latéraux (1200D) des goulottes (1200) du deuxième desdits modules (120) ;
- déplacement en translation du deuxième module (120) par rapport au premier module (110) pour conformer et lisser la portion de produit alimentaire disposé dans chaque cavité (130) formée par deux goulottes (1100, 1200) disposées en vis-à-vis ;
- retrait du produit alimentaire conformé dudit appareil (1).
